# EUROPEAN PATENT SPECIFICATION

(11) **EP 0 894 595 B1**
(45) Date of publication and mention of the grant of the patent: **18.09.2002**
(21) Application number: 97830356.8
(22) Date of filing: 30.07.1997
(51) Int. Cl.: B29B 17/00, B29C 47/02, B29C 45/14

(54) **System for coating metal articles by recovered heterogeneous plastic materials**
System zum Beschichten von Metallgegenständen mit recyclierten Kunststoffgemischen
Système de revêtement d'objets métalliques par des matériaux plastiques hétérogènes recyclés

(43) Date of publication of application: 03.02.1999
(73) Proprietor: LAGER ETABLISSEMENT, 20400 Vaduz (LI)
(72) Inventor: Klein, Rudolf, c/o LAGER ETABLISSEMENT, 20400 Vaduz (LI)
(74) Representative: Cicogna, Franco

(56) References cited:
- EP-A- 0 581 208
- EP-A- 0 661 145
- EP-A- 0 679 489
- WO-A-93/01034
- DE-A- 3 907 748
- DE-A- 4 303 929
- DE-A- 19 517 586
- US-A- 5 026 451
- BARICH G: "KUNSTOFF-RECYCLING AUF DER IFAT 87 8. INTERNATIONAL FACHMESSE FUER ENTSORGUNG, 19. BIS 23. MAI 1987 IN MUENCHEN" KUNSTSTOFFE, vol. 77, no. 8, 1 August 1987, pages 758-760, XP002003424

## Description

### BACKGROUND OF THE INVENTION

The present invention relates to a system for coating metal articles in general by recycled heterogeneous plastic materials, in accordance with the preamble of appended claim 1. Such a system is known from EP-A-0 661 145.

As is known, a very important problem is at present that of properly recycling plastic materials and, in particular, heterogeneous plastic materials, i.e. those plastic materials which are derived from the compounding of several plastic materials having different properties and/or characteristics.

A great problem, in particular, is that the different properties of the plastic materials do not allow to provide easily industrially applied products and, moreover, that it is not possible to cause the plastic materials to be firmly clamped on the metal core of the products or articles being coated.

### SUMMARY OF THE INVENTION

Accordingly, the aim of the present invention is to overcome the above mentioned drawbacks, by providing a system for coating metal articles in general, allowing to obtain a very good outer finishing degree, together with a firm clamping or gripping of the plastic material on a metal core, which, preferably, is of a multiple section tubular type.

Within the scope of the above mentioned aim, a main object of the present invention is to provide such a coating system allowing to easily made several types of different coatings, with thickness susceptible to be modified with respect to the metal core being used.

Another object of the present invention is to provide such a coating system allowing a very good distribution of the plastic material on the article to be obtained, without causing any difficulties like those which are typically encountered in prior systems not suitable to process heterogeneous plastic materials.

Yet another object of the present invention is to provide such a coating system which is very reliable and safe in operation.

According to the present invention, the above mentioned aim and objects, as well as yet other objects, which will become more apparent hereinafter, are achieved by a coating system as defined in appended claim 1. Preferred embodiments of the system are defined in the dependent claims.

### BRIEF DESCRIPTION OF THE DRAWINGS

Further characteristics and advantages of the present invention will become more apparent hereinafter from the following disclosure of a preferred, though not exclusive, embodiment of a coating system for coating metal articles in general, which is illustrated, by way of an indicative, but not limitative, example, in the accompanying drawings, where:

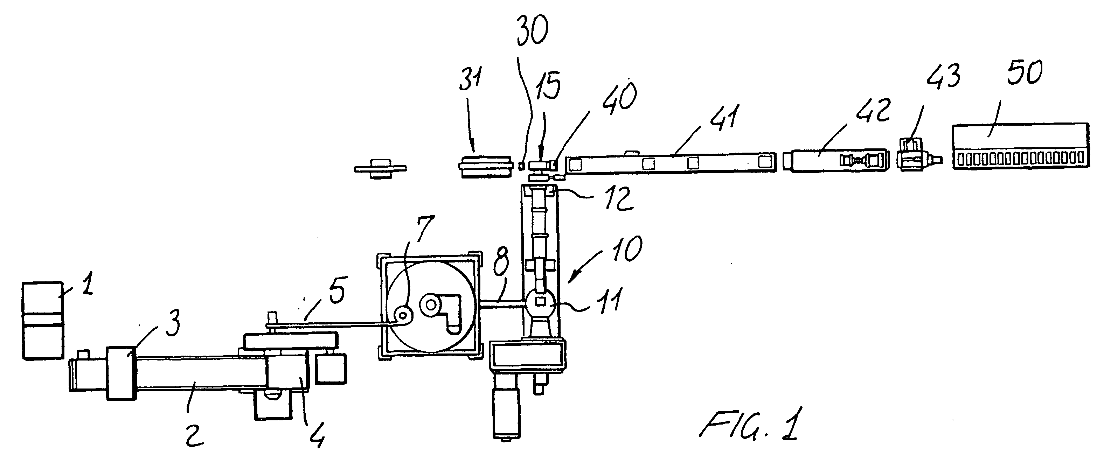

Figure 1 is a schematic top plan view illustrating the coating system according to the present invention;

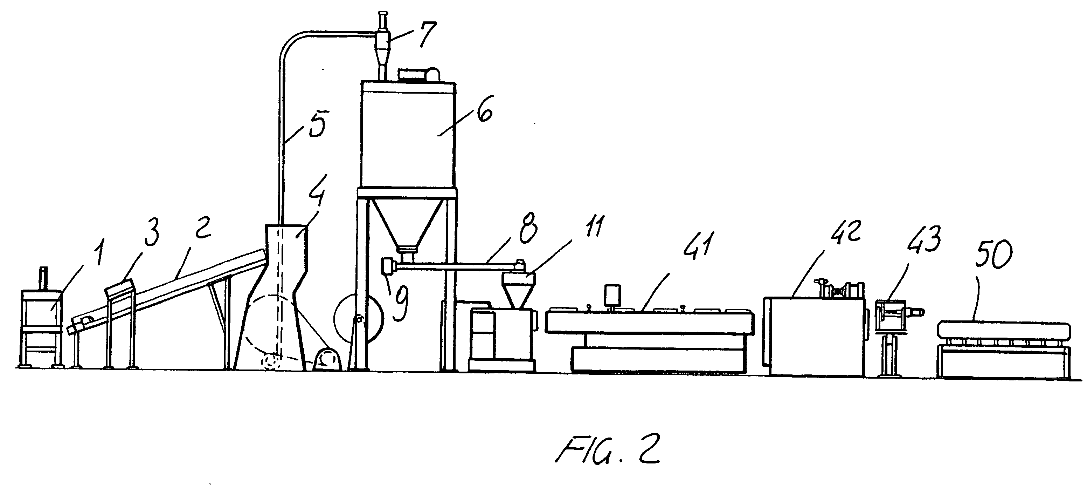

Figure 2 is an elevation view illustrating the coating system according to the present invention; and

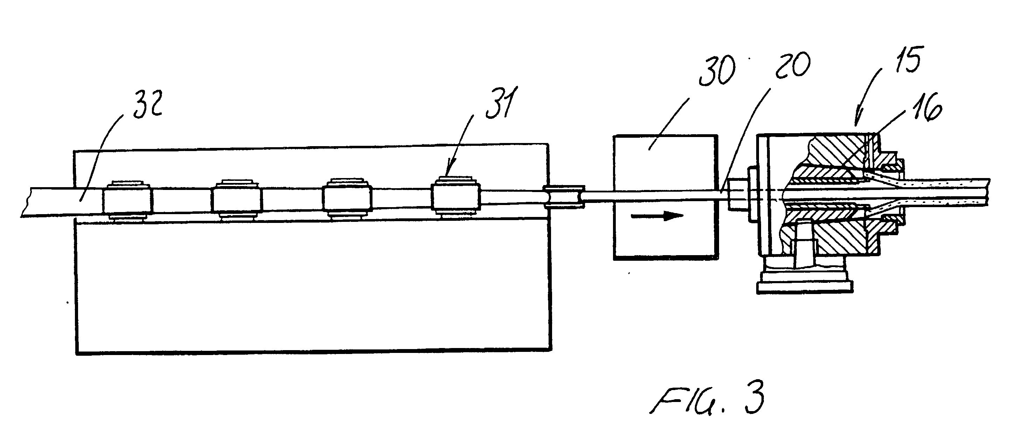

Figure 3 is a partially cross-sectioned view illustrating a detail of a cross extruding head and metal core supplying line included in the coating system according to the present invention.

### DESCRIPTION OF THE PREFERRED EMBODIMENT

With reference to the number references of the above mentioned figures, the coating system for coating metal articles in general, according to the present invention, comprises a guillotine type of cutter 1 for providing a first crushing of the heterogeneous plastic material used for the coating process.

At the outlet of the cutter assembly 1 a conveyor belt 2 is arranged, thereon a detector 3 is provided for detecting the presence of metal materials to be removed from the plastic materials.

At the end of the conveyor belt 2, the plastic material will be introduced into a grinding assembly 4 which is preferably constituted by a blade type of mill 4, thereon a pneumatic conveyor 5 operates, said pneumatic conveyor taking the ground plastic material and sending it to a storing silo 6, after having introduced said plastic material into a cyclone 7.

On the bottom of the storing silo 6, a screw removing device 8 is provided, including a driving motor 9 taking up the plastic material from the bottom of the storing silo 6 and supplying said taken plastic material into an extruder, generally indicated by the reference number 10.

Between the storing silo 6 and extruder 10 a forcing and pressing vertical device 11 is moreover provided, which is also operated by a respective motor.

The extruder 10 is of a twin-screw or single-screw type and can operate either with head filters 12 or without any filtering assembly.

The product is extruded by an extruding head 15 which is of a conventional type and provided with a delivery or metering cone 16, axially of which a metal core 20 is supplied, said metal core 20 being fed by a pre-heating assembly, generally indicated by the reference number 30, and which can be arranged upstream of a roller assembly 31 for properly shaping or contouring the sheet metal element 32.

More specifically, the heating assembly can comprise a plurality of infrared lamps operating to over-heat the iron or metal material for obtaining a better clamping of the plastic material thereon.

The sheet metal element 32 can be supplied through a profiling apparatus or directly by already preformed tubular elements or elements having other geometrical configurations such as a triangle or trapezoid configuration or any other steel section member to be covered, by simultaneously changing either the thickness and the size thereof.

The coating method, in particular, is carried out through an automatic collecting device conveying the metal section members on a crawler skid or on a rotary skid, without any manual intervention.

The plastic material, owing to the specifically designed arrangement of the extruding head, which is located at 90° with respect to the metal core supplying line, generally indicated by the reference number 20, will be evenly distributed on said metal core, thereby providing a firmly clamped coating.

In particular, the thickness of said coating will be adjusted by a sizing or gauging assembly 40, downstream of which a spray cooling basin 41 is provided.

The subject coating system comprises moreover a sandwich belt conveying assembly 42 as well as a flying cutter assembly 43, for cutting in length having a desired dimension pole articles coated by the above disclosed coating system.

At the end of the process line a collection region can be provided, which has been generally indicated by the reference number 50.

To the above it is to be added that after the sizing or gauging operation, the material being still in a hot condition, a second vertical coextruding operation can be performed in order to enhance or improve the outer aesthetic aspect of the product, and, for performing such an aesthetic improving method, conventional extruders can be used, specifically designed for processing not heterogeneous plastic materials.

At the end portion of the processing line it is further possible to provide a collecting line, including a handling device for taking up the cut to size pole to bring it to a mold assembly directly mounted on an injection machine where it will be finished and provided with the pointed end portion.

To this connection it should be pointed out that in said plastic materials it is possible to fill-in or disperse processing aids such as, for example, insecticide to be gradually released or, for example, in making electric lighting poles, phosphorescent substance for making said electric pole luminescent.

From the above disclosure, it should be apparent that the invention fully achieves the intended aim and objects.

In particular, the fact is to be pointed out that a coating system has been provided which allows to use heterogeneous recycled plastic materials without the need of performing a preliminarily selection of the plastic materials.

The finished article will always have a very good quality owing to the prevision of the cross-wise arranged extruding head, which, in particular, is arranged at 90° with respect to the metal core supplying line, thereby always providing a very satisfactory clamping of the plastic material on the metal cores.

The invention, as disclosed, is susceptible to several modifications and variations, all of which will come within he scope of the invention as defined in the appended claims.

Moreover, all of the details can be replaced by other technically equivalent elements.

In practicing the invention, the used materials, provided that they are compatible to the intended application, as well as the contingent size and shapes, can be any, depending on requirements.

## Claims

1. A coating system for coating metal articles in general by recycled heterogeneous plastic materials, comprising a storing silo (6) for storing therein ground plastic material, communicating with an extruder (10) provided with an extruding head (15) arranged transversely of a metal tubular core supplying line (20) for supplying a metal tubular core to be coated, a sizing assembly (40) arranged at the outlet of said extruding head (15), **characterized in that** said system comprises moreover a metal tubular core heating assembly (30) for overheating said metal tubular core to a temperature allowing said recycled heterogeneous plastic material to firmly adhere to said metal tubular core.

2. A coating system, according to Claim 1, **characterized in that** said system comprises a pre-cutting assembly (1) for pre-cutting the plastic material to be stored in said storing silo (6).

3. A coating system, according to the preceding claims, **characterized in that** said system comprises a grinding assembly including a grinding mill (4), supplied by precut plastic material.

4. A coating system, according to one or more of the preceding claims, **characterized in that** said system comprises pneumatic conveyor means (5) providing communication between said grinding mill (4) and supplying silo (6).

5. A coating system, according to one or more of the preceding claims, **characterized in that** said system comprises moreover, on the bottom of said storing silo (6), a screw motorized removing device, for removing said plastic material and sending said plastic material to said extruder (10).

6. A coating system, according to Claim 1, **characterized in that** said extruding head (15) is arranged at substantially 90° with respect to the supplying line (20).

7. A coating system, according to Claim 1, **characterized in that** said extruder (10) is of a single-screw type.

8. A coating system, according to Claim 1, **characterized in that** said extruder (10) is of a twin-screw type.

9. A coating system, according to Claim 1, **characterized in that** said metal tubular core supplying line (20) comprises a forming assembly for making said metal tubular core starting from a sheet metal element (32).

10. A coating system, according to Claim 1, **characterized in that** said heating assembly (30) includes a plurality of infrared lamps.

11. A coating system, according to one or more of the preceding claims, **characterized in that** said coating system comprises a filtering assembly (12) arranged at said extruding head (15).

12. A coating system, according to one or more of the preceding claims, **characterized in that** said coating system comprises a cooling assembly (4) provided downstream of said sizing assembly (40).

13. A coating system, according to Claim 12, **characterized in that** said cooling assembly (40) comprises a spray cooling basin (41).

14. A coating system, according to one or more of the preceding claims, **characterized in that** said coating system comprises a sandwich conveyor belt assembly (42).

15. A coating system, according to Claim 1, **characterized in that** said coating system comprises, at the end of the processing line (20), a collection region (50).

16. A coating system, according to Claim 1, **characterized in that** said coating system comprises, downstream of said sizing assembly (40), a second vertical coextruding head for coating said metal tubular core by a hot heterogeneous plastic material.

17. A coating system, according to Claim 1, **characterized in that** said coating system comprises a collecting region (50) including a handling device for taking up a cut to size metal tubular core.

18. A coating system, according to Claim 1, **characterized in that** said metal tubular core is a metal tubular pole.

19. A coating system, according to Claim 18, further comprising a mold mounted on a plastic material injection apparatus for providing said tubular pole with a pointed end portion.

## Patentansprüche

1. Beschichtungssystem zum Beschichten von Metallgegenständen im allgemeinen mit recycelten heterogenen Kunststoffmaterialien, mit einem Lagerungssilo (6) zur Lagerung von gemahlenem Kunststoffmaterial, das mit einem Extruder (10) in Verbindung steht, der mit einem Extrusionskopf (15) verbunden ist, welcher quer zu einer einen rohrförmigen Metallkern zuführenden Zeile (20) zur Zufuhr eines zu beschichtenden rohrförmigen Metallkerns angeordnet ist, wobei an dem Auslaß des Extrusionskopfes (15) eine Dimensionierungsbaugruppe (40) angeordnet ist,
**dadurch gekennzeichnet, daß**
das System darüber hinaus eine Baugruppe (30) zum Erwärmen des rohrförmigen Metallkerns aufweist, um den rohrförmigen Metallkern auf eine Temperatur zu erwärmen, die ein festes Haften des recycelten, heterogenen Kunststoffmaterials auf dem rohrförmigen Metallkern ermöglicht.

2. Beschichtungssystem nach Anspruch 1,
**dadurch gekennzeichnet, daß**
das System eine Vorzerkleinerungsbaugruppe (1) zum Vorschneiden des in dem Lagerungssilo (6) zu lagernden Kunststoffmaterials aufweist.

3. Beschichtungssystem nach den vorangegangenen Ansprüchen,
**dadurch gekennzeichnet, daß**
das System eine Mahlbaugruppe mit einer Schneidmühle (4) aufweist, der vorzerkleinertes Kunststoffmaterial zugeführt wird.

4. Beschichtungssystem nach einem oder mehreren der vorangegangenen Ansprüche,
**dadurch gekennzeichnet, daß**
das System pneumatische Fördermittel (5) aufweist, die eine Verbindung zwischen der Schneidmühle (4) und dem Materialzufuhrsilo (6) bereitstellen.

5. Beschichtungssystem nach einem oder mehreren der vorangegangenen Ansprüche,
**dadurch gekennzeichnet, daß**
das System darüber hinaus auf dem Boden des Lagerungssilos (6) eine motorgetriebene Schneckenfördervorrichtung zum Fördern des Kunststoffmaterials und dessen Zufuhr zu dem Extruder (10) aufweist.

6. Beschichtungssystem nach Anspruch 1,
**dadurch gekennzeichnet, daß**
der Extrusionskopf (15) im wesentlichen mit 90° im Verhältnis zu der Zufuhrzeile (20) angeordnet ist.

7. Beschichtungssystem nach Anspruch 1,
**dadurch gekennzeichnet, daß**
es sich bei dem Extruder (10) um einen Einschnekkenextruder handelt.

8. Beschichtungssystem nach Anspruch 1,
**dadurch gekennzeichnet, daß**
es sich bei dem Extruder (10) um einen Doppelschneckenextruder handelt.

9. Beschichtungssystem nach Anspruch 1,
**dadurch gekennzeichnet, daß**
die den rohrförmigen Metallkern zuführende Zeile (20) eine Formgebungsbaugruppe zur Herstellung des rohrförmigen Metallkerns aus einem Blechelement (32) aufweist.

10. Beschichtungssystem nach Anspruch 1,
**dadurch gekennzeichnet, daß**
die Erwärmungsbaugruppe (30) eine Mehrzahl von Infrarotlampen aufweist.

11. Beschichtungssystem nach einem oder mehreren der vorangegangenen Ansprüche,
**dadurch gekennzeichnet, daß**
das Beschichtungssystem eine an dem Extrusionskopf (15) angeordnete Filterbaugruppe (12) aufweist.

12. Beschichtungssystem nach einem oder mehreren der vorangegangenen Ansprüche,
**dadurch gekennzeichnet, daß**
das Beschichtungssystem eine stromabwärts der Dimensionierungsbaugruppe (40) vorgesehene Kühlungsbaugruppe (4) aufweist.

13. Beschichtungssystem nach Anspruch 12,
**dadurch gekennzeichnet, daß**
die Kühlungsbaugruppe (40) ein Sprühkühlungsbecken (41) aufweist.

14. Beschichtungssystem nach einem oder mehreren der vorangegangenen Ansprüche,
**dadurch gekennzeichnet, daß**
das Beschichtungssystem eine Sandwich-Förderbandbaugruppe (42) aufweist.

15. Beschichtungssystem nach Anspruch 1,
**dadurch gekennzeichnet, daß**
das Beschichtungssystem am Ende der Verarbeitungszeile (20) einen Sammelbereich (50) aufweist.

16. Beschichtungssystem nach Anspruch 1,
**dadurch gekennzeichnet, daß**
das Beschichtungssystem stromabwärts der Dimensionierungsbaugruppe (40) einen zweiten vertikalen Coextrusionskopf zum Beschichten des rohrförmigen Metallkerns mit einem warmen heterogenen Kunststoffmaterial aufweist.

17. Beschichtungssystem nach Anspruch 1,
**dadurch gekennzeichnet, daß**
das Beschichtungssystem einen Sammelbereich (50) mit einer Handhabungsvorrichtung zur Aufnahme von auf die richtige Größe zugeschnittenen rohrförmigen Metallkernteilen aufweist.

18. Beschichtungssystem nach Anspruch 1,
**dadurch gekennzeichnet, daß**
der rohrförmige Metallkern eine rohrförmige Metallstange ist.

19. Beschichtungssystem nach Anspruch 18,
**dadurch gekennzeichnet, daß**
es weiterhin eine auf einer Kunststoffeinspritzvorrichtung angebrachte Gießform aufweist, um die rohrförmige Stange mit einem zugespitzten Endabschnitt zu versehen.

## Revendications

1. Système de revêtement pour revêtir des objets métalliques en général par des matériaux plastiques hétérogènes recyclés, comprenant un silo de stockage (6) pour stocker un matériau plastique broyé, communiquant avec une extrudeuse (10) munie d'une tête de filière (15) disposée transversalement par rapport à un tapis d'alimentation (20) apportant le noyau métallique tubulaire à revêtir, un assemblage (40) de formage (« sizing assembly ») disposé à la sortie de ladite tête de filière (15), **caractérisé en ce que** ledit système comprend de plus un assemblage de chauffage (30) de noyaux métalliques tubulaires pour surchauffer ledit noyau tubulaire métallique à une température permettant audit matériau plastique hétérogène recyclé d'adhérer fermement audit noyau métallique tubulaire.

2. Système de revêtement, selon la revendication 1, **caractérisé en ce que** ledit système comprend un assemblage de découpage (1) pour pré-découper le matériau plastique à stocker dans ledit silo de stockage (6).

3. Système de revêtement, selon les revendications précédentes, **caractérisé en ce que** ledit système comprend un assemblage de broyage incluant un broyeur (4), alimenté par le matériau plastique prédécoupé.

4. Système de revêtement, selon l'une quelconque des revendications précédentes, **caractérisé en ce que** ledit système comprend un moyen de transport pneumatique (5) fournissant une communication entre ledit broyeur (4) et ledit silo d'alimentation (6).

5. Système de revêtement, selon l'une quelconque des revendications précédentes, **caractérisé en ce que** ledit système comprend de plus, au fond dudit silo de stockage (6), un dispositif motorisé à vis d'enlèvement, pour enlever ledit matériau plastique et pour envoyer ledit matériau plastique vers ladite extrudeuse (10).

6. Système de revêtement, selon la revendication 1, **caractérisé en ce que** ladite tête de filière (15) est disposée à sensiblement 90° par rapport au tapis d'alimentation (20).

7. Système de revêtement, selon la revendication 1, **caractérisé en ce que** ladite extrudeuse (10) est d'un type contenant une seule vis.

8. Système de revêtement, selon la revendication 1, **caractérisé en ce que** ladite extrudeuse (10) est d'un type contenant deux vis.

9. Système de revêtement, selon la revendication 1, **caractérisé en ce que** ledit tapis d'alimentation (20) apportant le noyau métallique tubulaire comprend un assemblage de déformation plastique pour fabriquer ledit noyau métallique tubulaire en partant d'un élément de feuille métallique (32).

10. Système de revêtement, selon la revendication 1, **caractérisé en ce que** ledit assemblage chauffant (30) inclut plusieurs lampes infrarouges.

11. Système de revêtement, selon l'une quelconque des revendications précédentes, **caractérisé en ce que** ledit système de revêtement comprend un assemblage de filtration (12) disposé sur ladite tête de filière (15).

12. Système de revêtement, selon l'une quelconque des revendications précédentes, **caractérisé en ce que** ledit système de revêtement comprend un assemblage réfrigérant (4) prévu en dessous dudit assemblage de formage (40).

13. Système de revêtement, selon la revendication 12, **caractérisé en ce que** ledit assemblage réfrigérant (40) comprend un réservoir (41) réfrigérant de vaporisation.

14. Système de revêtement, selon l'une quelconque des revendications précédentes, **caractérisé en ce que** ledit système de revêtement comprend un assemblage (42) comprenant des courroies de transport de type sandwich.

15. Système de revêtement, selon la revendication 1, **caractérisé en ce que** ledit système de revêtement comprend, à l'extrémité du tapis d'alimentation (20) de traitement, une région de collecte (50).

16. Système de revêtement, selon la revendication 1, **caractérisé en ce que** ledit système de revêtement comprend, en dessous dudit assemblage de formage (40), une seconde tête de filière verticale pour revêtir ledit noyau métallique tubulaire par un matériau plastique hétérogène chaud.

17. Système de revêtement, selon la revendication 1, **caractérisé en ce que** ledit système de revêtement comprend une région de collecte (50) incluant un dispositif de manutention pour enlever une partie du noyau métallique tubulaire formé.

18. Système de revêtement, selon la revendication 1, **caractérisé en ce que** le noyau métallique tubulaire est un pôle métallique tubulaire.

19. Système de revêtement, selon la revendication 18, comprenant en outre un moule monté sur un dispositif d'injection de matériau plastique pour munir ledit pôle tubulaire d'une portion d'extrémité en pointe.
